# EUROPEAN PATENT SPECIFICATION

(11) **EP 2 963 754 B1**
(45) Date of publication and mention of the grant of the patent: **24.04.2019**
(21) Application number: 15166189.9
(22) Date of filing: 04.05.2015
(51) Int. Cl.: H02H 7/122, H02J 3/38, H02M 7/48, H02M 1/32

(54) **DECENTRALIZED POWER SUPPLY SYSTEM**
DEZENTRALES STROMVERSORGUNGSSYSTEM
SYSTÈME D'ALIMENTATION EN PUISSANCE DÉCENTRALISÉ

(30) Priority: 30.06.2014 JP 2014134388
(43) Date of publication of application: 06.01.2016
(73) Proprietor: AISIN SEIKI KABUSHIKI KAISHA, Kariya-shi, Aichi 448-8650 (JP)
(72) Inventor: Yai, Katsunori, Kariya-shi, Aichi 448-8650 (JP); Naoi, Norihiro, Kariya-shi, Aichi 448-8650 (JP)
(74) Representative: TBK

(56) References cited:
- JP-A- 2012 070 502
- JP-A- 2013 212 026
- US-A- 5 493 485
- US-A1- 2002 085 397
- US-A1- 2012 002 454
- US-A1- 2014 176 053

## Description

### TECHNICAL FIELD

This disclosure generally relates to a decentralized power supply system.

### BACKGROUND DISCUSSION

Document US 2002/0085397 discloses a solar power generation system comprising an inverter including a smoothing capacitor, and a degradation determination section and an output suppressing section. If the degradation determination section determines a degradation in the capacitor, the operation of the inverter is continued while suppressing the output current of the inverter by the output suppressing section. In addition, a warning section warns the user about the degradation in capacitor.

One form of a decentralized power supply system is disclosed in JP2013-212026A (hereinafter referred to as Patent reference 1). As disclosed in Patent reference 1, a protection control circuit of the decentralized power supply system (a system interconnection inverter system) includes an analog-to-digital converter converting an alternating-current power inputted from an electric wire into digital signals. The protection control circuit of the decentralized power supply system further includes a programmable logic device determining whether the alternating-current power is abnormal by the comparison of the digital signals generated by the analog-to-digital converter and a threshold value. The programmable logic device includes a portion that detects the abnormality of the analog-to-digital converter on the basis of a value that is converted by a known analog-to-digital conversion of a reference voltage inputted to the analog-to-digital converter.

According to the protection control circuit disclosed in Patent reference 1, in a case where the reference voltage varies due to the occurrence of the abnormality, a detection accuracy of a voltage of a system power supply may be degraded. In such a case, it is desired to detect the degradation of the detection accuracy of the voltage of the system power supply.

Thus, it is an object to provide a decentralized power supply system that detects a degradation of a detection accuracy of a voltage of a system power supply.

### SUMMARY

According to an aspect of this disclosure, the above object is solved by a decentralized power supply system as set out in claim 1.

Accordingly, the voltage of the system power supply can be detected by two independent systems. That is, a first system detects the voltage of the system power supply by the first analog-to-digital converter to which the first reference voltage and the first detection circuit output outputted from the system voltage detection circuit are inputted. A second system detects the voltage of the system power supply by the second analog-to-digital converter to which the second reference voltage and the second detection circuit output outputted from the system voltage detection circuit are inputted. According to this configuration, the first analog-to-digital output value outputted by the first analog-to-digital converter and the second analog-to-digital output value outputted by the second analog-to-digital converter are inputted to and are compared by the comparison portion. The detection accuracy determination portion can determine the detection accuracy of the voltage of the system power supply on the basis of the comparison result inputted by the comparison portion. Thus, the control unit can securely detect the degradation of the detection accuracy of the voltage of the system power supply.

Advantageous developments are defined in the dependent claims.

For example, according to still another aspect of this disclosure, the decentralized power supply system further includes a reference voltage supply portion generating a first reference voltage and supplying the first reference voltage to the first analog-to-digital converter, the reference voltage supply portion generating a second reference voltage and supplying the second reference voltage to the second analog-to-digital converter.

Accordingly, the first reference voltage being supplied to the first A/D converter and the second reference voltage being supplied to the second A/D converter can be provided independently. Thus, in a case where the detection accuracy of the voltage of the system power supply comes to be low by the occurrence of the difference between the output values of the first
and second A/D converters due to the abnormality of one of the reference voltages, the degradation of the detection accuracy of the voltage of the system power supply can be securely detected.

According to further aspect of this disclosure, the detection accuracy determination portion determines that the detection accuracy of the voltage of the system power supply is high in a case where the first reference voltage and the second reference voltage correspond to a predetermined reference voltage and in a case where the first analog-to-digital converter and the second analog-to-digital converter output a same output value.

Accordingly, the voltage of the system power supply can be detected by the independent systems. That is, a first system detects the voltage of the system power supply by the first analog-to-digital converter to which the first reference voltage and the first detection circuit output outputted from the system voltage detection circuit are inputted. A second system detects the voltage of the system power supply by the second analog-to-digital converter to which the second reference voltage and the second detection circuit output outputted from the system voltage detection circuit are inputted. According to this configuration, the first analog-to-digital output value outputted by the first analog-to-digital converter and the second analog-to-digital output value outputted by the second analog-to-digital converter are inputted to and are compared by the comparison portion. The detection accuracy determination portion can determine the detection accuracy of the voltage of the system power supply on the basis of the comparison result inputted by the comparison portion. Thus, the control unit can securely detect the degradation of the detection accuracy of the voltage of the system power supply.

According to still further aspect of this disclosure, the detection accuracy determination portion determines that the detection accuracy of the voltage of the system power supply is low in a case where at least one of the first reference voltage and the second reference voltage are out of a predetermined range and/or in a case where output values of the first analog-to-digital converter and the second analog-to-digital converter vary.

Accordingly, the first reference voltage being supplied to the first A/D converter and the second reference voltage being supplied to the second A/D converter can be provided independently. Thus, in a case where the detection accuracy of the voltage of the system power supply comes to be low by the occurrence of the difference between the output values of the first and second A/D converters due to the abnormality of one of the reference voltages, the degradation of the detection accuracy of the voltage of the system power supply can be securely detected.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a view schematically illustrating a decentralized power supply system according to an embodiment of this disclosure; and
Fig. 2 is a detailed view illustrating a control unit and a system voltage detection circuit shown in Fig. 1.

### DETAILED DESCRIPTION

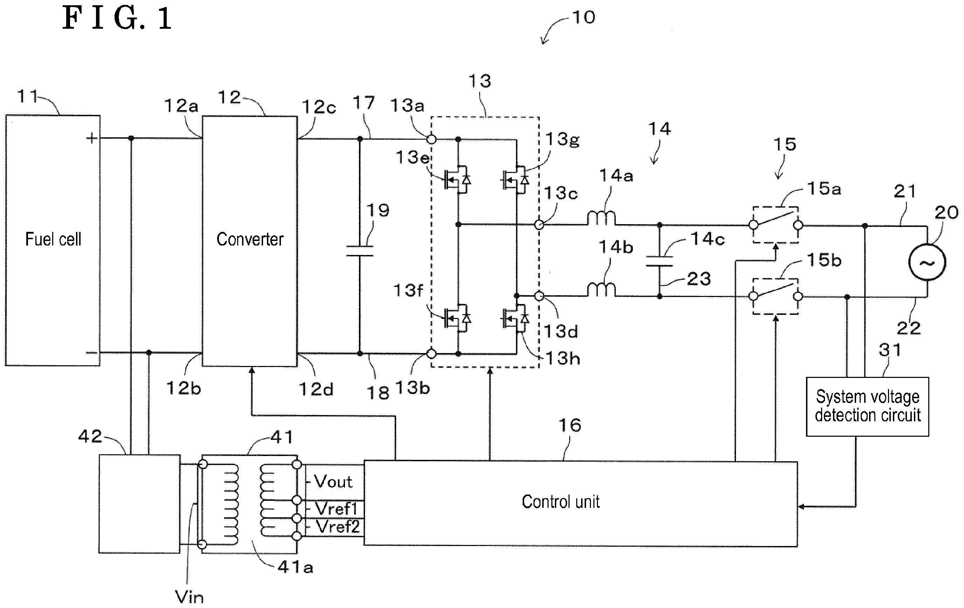

An embodiment of a decentralized power supply system of this disclosure will be explained. As shown in Fig. 1, a decentralized power supply system 10 includes a fuel cell 11 (i.e., serving as a power generation device), a converter 12, an inverter 13, a smoothing circuit 14, parallel off relays 15 (i.e., serving as a switch) and a control unit 16.

The fuel cell 11 corresponds to the power generation device that generates a direct-current power or a DC power. The power generation device may be, for example, a solar cell or a gas engine that generates the DC power instead of the fuel cell 11. The converter 12 boosts the DC power generated by the fuel cell 11 and outputs the DC power to the inverter 13. The converter 12 is configured with a reactor, a switching element, for example, an insulated gate bipolar transistor or an IGBT, a diode and a condenser. A first input terminal 12a of the converter 12 is connected to a cathode of the fuel cell 11. A second input terminal 12b of the converter 12 is connected to an anode of the fuel cell 11.

A first output terminal 12c of the converter 12 is connected to a first input terminal 13a of the inverter 13 via an electric wire 17. A second output terminal 12d of the converter 12 is connected to a second input terminal 13b of the inverter 13 via an electric wire 18. A voltage sensor measuring an output voltage (the DC voltage) of the converter 12 is provided between the electric wires 17, 18. Detection signals detected by the voltage sensor 31 are inputted to the control unit 16. By applying a pulse signal having a duty ratio that is determined by arithmetic processing to a gate of the switching element, the control unit 16 operates a feedback control that makes the output voltage of the converter 12 be a predetermined voltage. A condenser 19 is provided between the electric wires 17, 18.

The inverter 13 converts the DC power transmitted from the converter 12, that is, the DC power generated by the fuel cell 11, into the AC power and outputs the AC power to the system power supply 20. The inverter 13 includes the first and second input terminals 13a, 13b, a first output terminal 13c and a second output terminal 13d. The first output terminal 13c of the inverter 13 is connected to an electric wire 21 being connected to the system power supply 20 (for example, U-phase). The second output terminal 13d of the inverter 13 is connected to an electric wire 22 being connected to the system power supply 20 (for example, V-phase). Each of the first and second output terminals 13c, 13d is connected to each of the electric wires 21, 22 that support plural phases of the system power supply 20.

The inverter 13 includes first, second, third and fourth switching elements 13e, 13f, 13g, 13h that are examples of the IGBT and that are connected in a full-bridge configuration. The first and second switching elements 13e, 13f are positioned between the first and second input terminals 13a, 13b and are connected in series. A connection point of the first and second switching elements 13e, 13f is connected to the first output terminal 13c. The third and fourth switching elements 13g, 13h are positioned between the first and second input terminals 13a, 13b and are connected in series. The third and fourth switching elements 13g, 13h are connected to each other and are positioned in parallel with the first and second switching elements 13e, 13f. A connection point of the third and fourth switching elements 13g, 13h is connected to the second output terminal 13d.

The operation of the inverter 13 is controlled by the control unit 16. Specifically, the inverter 13 switches the first, second, third and fourth switching elements 13e, 13f, 13g, 13h in response to a pulse width modulation control or a PWM control by the control unit 16, and converts the DC power transmitted from the converter 12 into the AC power. As such, the inverter 13 outputs the converted AC power to the electric wires 21, 22.

The smoothing circuit 14 is configured with a first reactor 14a, a second reactor 14b and a condenser 14c. The first and second reactors 14a, 14b are provided at the electric wires 21, 22, respectively. Alternatively, the first reactor 14a or the second reactors 14b can be provided at one of the electric wires 21, 22. That is, the first reactor 14a (or the second reactor 14b) can be provided at at least one of the electric wires 21, 22 that configure a loop circuit A. The condenser 14c is disposed at a connection electric wire 23 that is positioned between a set of the first and second reactors 14a, 14b and the system power supply 20 and that connects the electric wires 21, 22. The smoothing circuit 14 removes a high-frequency component of the AC power outputted from the inverter 13 and converts an output current of the inverter 13 into a current having a form of sine wave. Then, the smoothing circuit 14 outputs the output voltage to the system power supply 20.

The parallel-off relays (relay for the system interconnection) 15 are configured with a first parallel-off relay 15a and a second parallel-off relay 15b. The parallel-off relays 15 serve as switches provided at the electric wires 21, 22, respectively, and serve as normally-open type switches positioned between, a set of the connection points of the electric wires 21, 22 and the connection electric wire 23, and the inverter 13. The control unit 16 controls operations (closing and opening) of the first and second parallel-off relays 15a, 15b by control signals.

Specifically, the first parallel-off relay 15a is positioned at the electric wire 21 that serves as a first electric wire of the plural electric wires 21, 22. The second parallel-off relay 15b is positioned at the electric wire 22 that serves as a second electric wire of the electric wires 21, 22. When the first and second parallel-off relays 15a, 15b come to be in connected (closed) state or when each of the first and second parallel-off relays 15a, 15b is closed, the decentralized power supply system 10, that is, the fuel cell 11 and the system power supply 20 are interconnected. When the first and second parallel-off relays 15a, 15b come to be in an open state or when each of the first and second parallel-off relays 15a, 15b is open, the interconnection of the decentralized power supply system 10, that is, the fuel cell 11 and the system power supply 20 is released. As such, by controlling the parallel-off relays 15, the control unit 16 interconnects and releases the interconnection of the decentralized power supply system 10, that is, the fuel cell 11 and the system power supply 20 and controls the power supply.

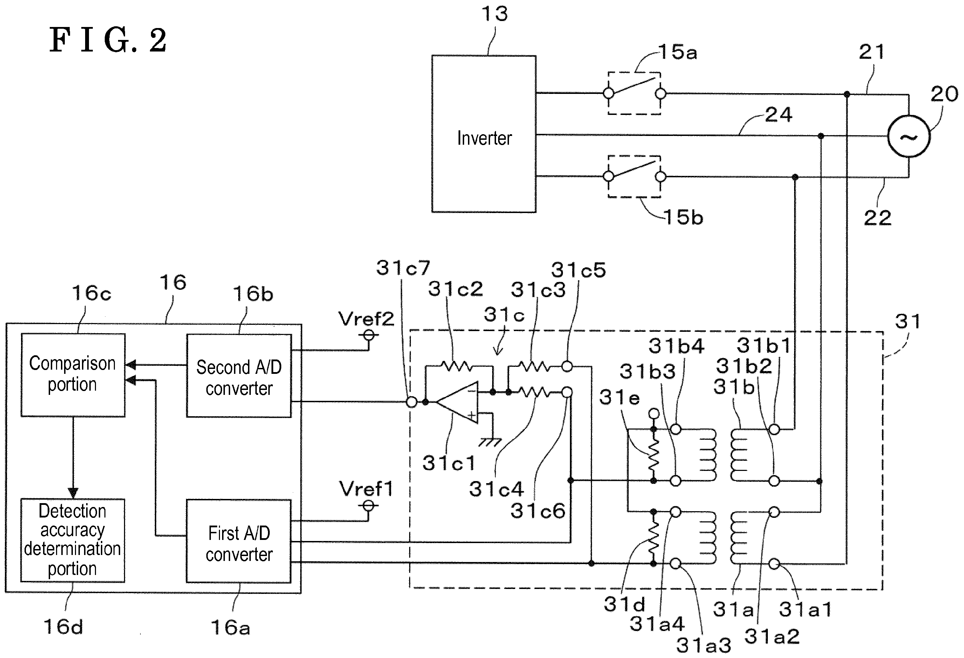

The electric wires 21, 22 are connected to a system voltage detection circuit 31 that detects a system voltage or a voltage of a system power supply. Detection signals of the system voltage detection circuit 31 are inputted to the control unit 16. In particular, as shown in Fig. 2, the system voltage detection circuit 31 includes first transformer 31a (i.e., serving as a detection portion) and a second transformer 31b (i.e., serving as a detection portion) and an adding circuit, or adder circuit 31c (i.e., serving as an adding portion). The first and second transformers 31a, 31b detect the voltages of the electric wires 21, 22, respectively.

An input terminal 31a1 of the first transformer 31a serving as a primary terminal and an input terminal 31a2 of the first transformer 31a serving as a primary terminal are connected to the electric wire 21 and an electric wire 24, respectively. The electric wire 24 is connected to N-phase of the system power 20. An output terminal 31a3 of the first transformer 31a serving as a secondary terminal is connected to a first input end of a first analog-to-digital converter 16a, or a first A/D converter 16a. An output terminal 31a4 of the first transformer 31a serving as the secondary terminal is grounded. A resistance 31d is positioned between the output terminal 31a3 and the output terminal 31a4 of the first transformer 31a and is connected thereto in series.

An input terminal 31b1 and an input terminal 31b2 of a second transformer 31b serving as the primary terminal are connected to the electric wires 22, 24, respectively. An output terminal 31b3 of the second transformer 31b serving as the secondary terminal is connected to a second input end of the first A/D converter 16a. An output terminal 31b4 of the second transformer 31b serving as the secondary terminal is connected to the output terminal 31a4 of the first transformer 31a while being grounded. A resistance 31e is positioned between the output terminal 31b3 and the output terminal 31b4 of the second transformer 31b and is connected thereto in series.

The adding circuit 31c corresponds to a known adding circuit, or a known adder circuit and outputs the sum of two or more values of inputted voltages. Specifically, the adding circuit 31c includes an operational amplifier 31c1, a feedback resistance 31c2, a first input resistance 31c3 and a second input resistance 31c4. A non-inverting terminal, or a positive terminal of the operational amplifier 31c1 is grounded. An inverting terminal, or a negative terminal of the operational amplifier 31c1 is connected to first ends of the first input resistance 31c3 and the second input resistance 31c4. A second end of the first input resistance 31c3 is connected to the output terminal 31a3 of the first transformer 31a via an input terminal 31c5. A second end of the second input resistance 31c4 is connected to the output terminal 31b3 of the second transformer 31b via an input terminal 31c6. The output terminal of the operational amplifier 31c1 is connected to an input end of the second A/D converter 16b via an output terminal 31c7. The feedback resistance 31c2 is positioned between the inverting terminal, or the negative terminal and the output terminal of the operational amplifier 31c1 and is connected thereto in series.

As such, a first detection circuit output outputted from the system voltage detection circuit 31 corresponds to the output from the first transformer 31a, that is, the voltage outputted from the output terminal 31a3 of the first transformer 31a and corresponds to the output from the second transformer 31b, that is, the voltage outputted from the output terminal 31b3 of the second transformer 31b. A second detection circuit output outputted from the system voltage detection circuit 31 corresponds to a voltage outputted from the adding circuit 31c.

As shown in Fig. 1, the decentralized power supply system includes a reference voltage supply circuit 41 (i.e., serving as a reference voltage supply portion). The reference voltage supply circuit 41 generates a first reference voltage Vref1 and supplies the first reference voltage Vref1 to the first A/D converter 16a. The reference voltage supply circuit 41 generates a second reference voltage Vref2 and supplies the first reference voltage Vref2 to the second A/D converter 16b. In particular, as shown in Fig. 1, a direct current-to-direct current converter 42 or a DC/DC converter 42 transforms the voltage (steps down the voltage) of the DC voltage generated by the fuel cell 11 and the reference voltage supply circuit 41 supplies the plural DC voltages being transformed (being stepped down) to the control unit 16. The reference voltage supply circuit 41 is configured with a transformer 41a. An output voltage Vin of the DC/DC converter 42 is inputted to a primary terminal of the transformer 41a. The plural DC voltages are outputted from a secondary terminal of the transformer 41a to the control unit 16. The output voltage includes the first and second reference voltages Vref1 and Vref2. The first reference voltage Vref1 is supplied to the first A/D converter 16a. The second reference voltage Vref2 is supplied to the second A/D converter 16b. The output voltage includes an output voltage Vout of, for example, 12V. Meanwhile, the first and second reference voltages Vref1, Vref2 are generated by different windings, however, may be generated by the same winging.

The control unit 16 at least controls the parallel relays 15 to be open and closed. The control unit 16 includes a microcomputer that is provided with an input/output interface, a central processing unit or a CPU, a Random Access Memory or a RAM, and a Read Only Memory, or a ROM that are connected to one another via buses. The CPU receives detection results detected by the system voltage detection circuit 31. The CPU controls the converter 12 and the inverter 13. The CPU controls the parallel-off relays 15 to be open and closed. The RAM temporarily stores variables required to execute the programs. The ROM stores the programs.

The control unit 16 includes the first A/D converter 16a, the second A/D converter 16b, a comparison portion 16c and a detection value accuracy determination portion 16d. The first reference voltage Vref1 and the first detection circuit output outputted from the system voltage detection circuit 31 are inputted to the first A/D converter 16a. The first A/D converter 16a performs the analog-to-digital conversion of the output voltages of the first and second transformers 31a, 31b that serve as the first detection circuit output. The output voltages of the first and second transformers 31a, 31b are added and are outputted to the comparison portion 16c as a first A/D output value (for example, DC200V). The second reference voltage Vref2 and the second detection circuit output outputted from the system voltage detection circuit 31 is inputted to the second A/D converter 16b. The second A/D converter 16b performs the analog-to-digital conversion of the output voltage of the adding circuit 31c (the operational amplifier 31c1) that serves as the second detection circuit output. The output voltage of the adding circuit 31c is outputted to the comparison portion 16c as a second A/D output value (for example, DC200V).

The first A/D output value outputted from the first A/D converter 16a and the second A/D output value outputted from the second A/D converter 16b are inputted to and compared by the comparison portion 16c. The comparison portion 16c compares the first A/D output value and the second A/D output value by calculating a difference between the first A/D output value and the second A/D output value or by dividing the first A/D output value by the second A/D output value.

The detection accuracy determination portion 16d determines the detection accuracy of the system voltage or determines whether the system voltage is detected accurately on the basis of the comparison result inputted from the comparison portion 16c. The determination of the detection accuracy of the voltage of the system power supply or the system voltage determined by the detection accuracy determination portion 16d will be explained. In a case where the first and second reference voltages Vref1, Vref2 correspond to be at a normal level (in a case where the first and second reference voltages Vref1, Vref2 correspond to a predetermined reference voltage), and in a case where the same value or substantially the same value of the voltages is inputted to the first and second A/D converters 16a, 16b, the first A/D output value outputted from the first A/D converter 16a and the second A/D output value outputted from the second A/D converter 16b correspond to the same value or substantially the same value. Thus, the comparison of the comparison portion 16c results in that the first and second A/D output values correspond to the same value or substantially the same value (for example, the difference between the first A/D output value and the second A/D output value corresponds to be within a predetermined range). The detection accuracy determination portion 16d determines that the detection accuracy of the system power voltage corresponds to be high (the detection accuracy is high) or that the system power voltage is detected accurately on the basis of the comparison result of the comparison portion 16c.

On the other hand, for example, in a case where the first reference voltage Vref1 corresponds to be at the normal level and the second reference voltage Vref2 is lower than the predetermined reference voltage, and in a case where the same value or substantially the same value of the voltage is inputted to the first and second A/D converters 16a, 16b, the first A/D output value outputted from the first A/D converter 16a comes to be at a normal value (at a normal level) and the second A/D output value outputted from the second A/D converter 16b comes to be smaller than the normal value (at a normal level). As such, in a case where the first and second reference voltages Vref1, Vref2 vary within the normal range, the output values of the first and second A/D converters 16a, 16b inputting the same value or substantially the same value of the voltage vary. Thus, the comparison of the comparison portion 16c results in that the first and second A/D output values are different from each other (for example, the difference between the first and second A/D output values are out of the predetermined range). The detection accuracy determination portion 16d determines that the detection accuracy of the voltage of the system power supply or the system voltage corresponds to be low (the detection accuracy is low) or that the voltage of the system power supply is not accurately detected on the basis of the comparison result of the comparison portion 16c.

The first and second transformers 31a, 31b output substantially the same value (for example, DC100V) in normal mode. In a case where the first and second transformers 31a, 31b output different values, the voltages inputted from first and second transformers 31a, 31b to the first and second A/D converters 16a, 16b, respectively, are different from each other. At this time, in a case where the first and second reference voltages Vref1, Vref2 correspond to be the same value or substantially the same value, the output values of the first and second A/D converters 16a, 16b come to vary (be different) from each other. As such, even in a case where the first and second reference voltages Vref1, Vref2 correspond to be the same value or substantially the same value, the output values of the first and second A/D converters 16a, 16b may vary. The comparison of the comparison portion 16c results in that the first A/D output value and the second A/D output value correspond to be different from each other (for example, the difference between the first and second A/D output values is out of the predetermined range). The detection accuracy determination portion 16d determines that the detection accuracy of the voltage of the system power supply corresponds to be low (the detection accuracy is low) or that the voltage of the system power supply is not accurately detected on the basis of the comparison result of the comparison portion 16c. Meanwhile, in such a case, the control unit 16 may control the parallel-off relay 15 to stop supplying the power to the system power supply 20 because of the abnormality of the system voltage detection circuit 31. For example, the parallel-off relay 15 may be opened.

Even in a case where the first and second reference voltages Vref1, Vref2 correspond to be the same value or substantially the same value and the same value or substantially the same value of the voltage is inputted to the first and second A/D converters 16a, 16b, the output values of the first and second A/D converters 16a, 16b may vary caused by the failures of the first and second A/D converters. In such a case, the comparison of the comparison portion 16c results in that the first and the second A/D output values correspond to be different from each other (for example, the difference between the first and second A/D output values is out of the predetermined range). The detection accuracy determination portion 16d determines that the detection accuracy of the voltage of the system power supply corresponds to be low (the detection accuracy is low) or that the voltage of the system power supply is not accurately detected on the basis of the comparison result of the comparison portion 16c.

As is clear from the aforementioned embodiment, the decentralized power supply system 10 includes the fuel cell 11 (the power generation device) generating the direct-current power, the alternating-current system power supply 20, the plural electric wires 21, 22, 24 corresponding to the plural phases of the alternating-current system power supply 20, respectively, the inverter 13 converting the direct-current power generated by the fuel cell 11 (the power generation device) into the AC power, the inverter 13 outputting the AC power from each of output terminals 13c, 13d of the inverter 13 to each of the plural electric wires 21, 22, 24, the output terminals 13c, 13d being connected to the plural electric wires 21, 22, 24, the parallel-off relays 15, 15a, 15b (the normally-open type switch) being provided at the electric wire 21, 22, 24, the parallel-off relays 15, 15a, 15b (the normally-open type switch) being positioned between the system power supply and the inverter 13, the system voltage detection circuit detecting the voltage of the system power supply 20 of each of the electric wires 21, 22, 24; and the control unit 16 to which the voltage of the system power voltage of the system voltage detection circuit is inputted. The control unit 16 includes the first analog-to-digital converter to which the first reference voltage and the first detection circuit output outputted from the system voltage detection circuit are inputted. The control unit 16 further includes the second analog-to-digital converter to which the second reference voltage and the second detection circuit output outputted from the system voltage detection circuit are inputted. The control unit 16 further includes the comparison portion 16c to which the first analog-to-digital output value outputted from the first analog-to-digital converter 16a and the second analog-to-digital output value outputted from the second analog-to-digital converter 16b are inputted, the comparison portion 16c comparing the first analog-to-digital output value outputted from the first analog-to-digital converter with the second analog-to-digital output value outputted from the second analog-to-digital converter. The control unit 16 further includes the detection accuracy determination portion 16d determining the detection accuracy of the voltage of the system power supply on the basis of the comparison result inputted from the comparison portion 16c.

Accordingly, the voltage of the system power supply can be detected by two independent systems. That is, a first system detects the voltage of the system power supply by the first A/D converter 16a to which the first reference voltage Vref1 and the first detection circuit output outputted from the system voltage detection circuit 31 are inputted. A second system detects the voltage of the system power supply by the second A/D converter 16b to which the second reference voltage Vref2 and the second detection circuit output outputted from the system voltage detection circuit 31 are inputted. According to this configuration, the first A/D output value outputted by the first A/D converter 16a and the second A/D output value outputted by the second A/D converter 16b are inputted to and are compared by the comparison portion 16c. The detection accuracy determination portion 16d can determine the detection accuracy of the voltage of the system power supply or can determine whether the voltage of the system power supply is accurately detected on the basis of the comparison result inputted by the comparison portion 16c. Thus, the control unit 16 can securely detect the degradation of the detection accuracy of the voltage of the system power supply. Accordingly, the decentralized power supply system can be operated accurately and precisely.

The system voltage detection circuit includes two transformers 31a, 31b (the detection portion) and the adding circuit 31c (the adding portion). The input terminals 31a1, 31a2, 31b1, 31b2 of the transformers 31a, 31b are connected to the two electric wires 21, 22. The output terminals 31a3, 31b3 of the transformers 31a, 31b are connected to the first A/D converter 16a. The input terminals 31c5, 31c6 of the adding circuit 31c are connected to the output terminals 31 a3, 31 b3 of the transformers 31a, 31b, respectively. The output terminal 31c7 of the adding circuit 31c is connected to the second A/D converter 16b. Accordingly, the system voltage detection circuit 31 can be outputted with at least a dual-circuit system. Further, the control burden of the second A/D converter 16b can be reduced.

The decentralized power supply system 10 further includes the reference voltage supply circuit 41 (a reference voltage supply portion) generating the first reference voltage Vref1 and supplying the first reference voltage Vref1 to the first analog-to-digital converter, the reference voltage supply circuit 41 (the reference voltage supply portion) generating the second reference voltage Vref2 and supplying the second reference voltage Vref2 to the second analog-to-digital converter 16b. Accordingly, the first reference voltage Vref1 being supplied to the first A/D converter 16a and the second reference voltage Vref2 being supplied to the second A/D converter 16b can be provided independently. Thus, in a case where the detection accuracy of the voltage of the system power supply comes to be low or in a case where the voltage of the system power supply is not accurately detected by the occurrence of the difference between the output values of the first and second A/D converters 16a, 16b due to the abnormality of one of the reference voltages Vref1, Vref2, the degradation of the detection accuracy of the voltage of the system power supply can be securely detected.

The detection accuracy determination portion 16d determines that the detection accuracy of the voltage of the system power supply 20 is high in a case where the first reference voltage Vref1 and the second reference voltage Vref2 correspond to the predetermined reference voltage and in a case where the first analog-to-digital converter 16a and the second analog-to-digital converter 16b output the same output value.

Accordingly, the voltage of the system power supply can be detected by two independent systems. That is, a first system detects the voltage of the system power supply by the first A/D converter 16a to which the first reference voltage Vref1 and the first detection circuit output outputted from the system voltage detection circuit 31 are inputted. A second system detects the voltage of the system power supply by the second A/D converter 16b to which the second reference voltage Vref2 and the second detection circuit output outputted from the system voltage detection circuit 31 are inputted. According to this configuration, the first A/D output value outputted by the first A/D converter 16a and the second A/D output value outputted by the second A/D converter 16b are inputted to and are compared by the comparison portion 16c. The detection accuracy determination portion 16d can determine the detection accuracy of the voltage of the system power supply or can determine whether the voltage of the system power supply is accurately detected on the basis of the comparison result inputted by the comparison portion 16c. Thus, the control unit 16 can securely detect the degradation of the detection accuracy of the voltage of the system power supply. Accordingly, the decentralized power supply system can be operated accurately and precisely.

The detection accuracy determination portion 16d determines that the detection accuracy of the voltage of the system power supply 20 is low in a case where at least one of the first reference voltage Vref1 and the second reference voltage Vref2 are out of a predetermined range and/or in a case where output values of the first analog-to-digital converter 16a and the second analog-to-digital converter 16b vary.

Accordingly, the first reference voltage Vref1 being supplied to the first A/D converter 16a and the second reference voltage Vref2 being supplied to the second A/D converter 16b can be provided independently. Thus, in a case where the detection accuracy of the voltage of the system power supply comes to be low or in a case where the voltage of the system power supply is not accurately detected by the occurrence of the difference between the output values of the first and second A/D converter 16a, 16b, the degradation of the detection accuracy of the voltage of the system power supply can be securely detected.

According to the aforementioned embodiment, the circuit configuration corresponds to a single-phase three-wire system. Alternatively, the circuit configuration may correspond to either a triple-phase three-wire system or a four-wire system. According to the aforementioned embodiment, the detection portion corresponds to the first and second transformers 31a, 31b, however is not limited to the first and second transformers 31a, 31b.
A decentralized power supply system includes a power generation device (11), an alternating-current system power supply (20), plural electric wires (21, 22, 24), an inverter (13), a normally-open type switch (15, 15a, 15b), a system voltage detection circuit (31), and a control unit (16). The control unit (16) includes a first A/D converter (16a) to which a first reference voltage (Vref1) and a first output outputted from the system voltage detection circuit (31) are inputted, a second A/D converter (16b) to which a second reference voltage (Vref2) and a second output outputted from the system voltage detection circuit (31) are inputted, a comparison portion (16c) comparing an output from the first A/D converter (16a) with an output from the second A/D converter (16b), and a detection accuracy determination portion (16d) determining a detection accuracy of the voltage of the system power supply (20) based on a comparison result.

## Claims

1. A decentralized power supply system, comprising:
a power generation device **(11)** generating a direct-current power;
an alternating-current system power supply **(20);**
first and second AC power electric wires **(21, 22)** and a third electric wire **(24)** corresponding to a plurality of phases of the alternating-current system power supply **(20),** respectively;
an inverter **(13)** converting the direct-current power generated by the power generation device **(11)** into an alternating-current power, the inverter **(13)** outputting the alternating-current power from each of output terminals **(13c, 13d)** of the inverter **(13)** to respective first and second AC power electric wires **(21, 22),** the output terminals **(13c, 13d)** being connected to the first and second electric wires **(21, 22);**
a normally-open type switch **(15, 15a, 15b)** being provided at each AC power electric wire **(21, 22),** each normally-open type switch **(15, 15a, 15b)** being positioned between the system power supply **(20)** and the inverter **(13);**
a system voltage detection circuit **(31)** detecting a voltage of the system power supply **(20)** of each of the first and second AC power electric wires **(21, 22);** and
a control unit **(16)** to which the voltage of the system power supply **(20)** detected by the system voltage detection circuit **(31)** is inputted;
wherein
the control unit **(16)** includes:
a first analog-to-digital converter **(16a)** to which a first reference voltage **(Vref1),** a first detection circuit output and a second detection circuit output individually outputted from the system voltage detection circuit **(31)** are inputted;
a second analog-to-digital converter **(16b)** to which a second reference voltage **(Vref2),** the sum of the first detection circuit output and the second detection circuit output outputted from the system voltage detection circuit **(31)** are inputted;
a comparison portion **(16c)** to which a first analog-to-digital output value outputted from the first analog-to-digital converter **(16a)** and a second analog-to-digital output value outputted from the second analog-to-digital converter **(16b)** are inputted, the comparison portion **(16c)** comparing the first analog-to-digital output value outputted from the first analog-to-digital converter **(16a)** with the second analog-to-digital output value outputted from the second analog-to-digital converter **(16b);** and
a detection accuracy determination portion **(16d)** determining a detection accuracy of the voltage of the system power supply **(20)** on a basis of a comparison result inputted from the comparison portion **(16c),** wherein
the first detection circuit output and the second detection circuit output are inputted individually to the first analog-to-digital converter (**16a**),
the first detection circuit output and the second detection circuit output are added and inputted to the second analog-to-digital converter **(16b),**
wherein a first detection portion **(31a)** of the system voltage detection circuit **(31)** detects a voltage of each of the first AC power electric wire **(21)** and the third electric wire **(24)** and outputs the first detection circuit output, and a second detection portion **(31b)** of the system detection circuit **(31)** detects a voltage of each of the second AC power electric wire **(22)** and the third electric wire **(24)** and outputs the second detection circuit output.

2. The decentralized power supply system according to claim 1, wherein:
the system voltage detection circuit **(31)** includes an adding portion **(31 c);**
the first and second detection portions **(31a, 31b)** include respective input terminals **(31a1, 31b1)** connected to the first and second AC power electric wires **(21, 22)** and respective input terminals **(31a2, 31b2)** connected to the third electric wire **(24),** the first and second detection portions **(31a, 31b)** further including respective output terminals **(31a3, 31b3)** that are individually connected to the first analog-to-digital converter **(16a);** and
the adding portion **(31c)** includes an input terminal **(31c5, 31c6)** being connected to the output terminals **(31a3, 31b3)** of the first and second detection portions **(31a, 31b),** the adding portion **(31c)** including an output terminal **(31c7)** being connected to the second analog-to-digital converter **(16b).**

3. The decentralized power supply system according to claim 2 further comprising:
a reference voltage supply portion **(41)** generating a first reference voltage **(Vref1)** and supplying the first reference voltage **(Vref1)** to the first analog-to-digital converter **(16a),** the reference voltage supply portion **(41)** generating a second reference voltage **(Vref2)** and supplying the second reference voltage **(Vref2)** to the second analog-to-digital converter **(16b).**

4. The decentralized power supply system according to claims 1 to 3, wherein:
the detection accuracy determination portion **(16d)** determines that the detection accuracy of the voltage of the system power supply **(20)** is high in a case where the first reference voltage **(Vref1)** and the second reference voltage **(Vref2)** correspond to a predetermined reference voltage and in a case where the first analog-to-digital converter **(16a)** and the second analog-to-digital converter **(16b)** output a same output value.

5. The decentralized power supply system according to claims 1 to 3, wherein:
the detection accuracy determination portion **(16d)** determines that the detection accuracy of the voltage of the system power supply **(20)** is low in a case where at least one of the first reference voltage **(Vref1)** and the second reference voltage **(Vref2)** are out of a predetermined range and/or in a case where output values of the first analog-to-digital converter **(16a)** and the second analog-to-digital converter **(16b)** vary.

## Patentansprüche

1. Dezentrales Leistungsversorgungssystem mit
einer Leistungserzeugungsvorrichtung **(11),** die eine Gleichstromleistung erzeugt,
einer Wechselstrom-Systemleistungsversorgung **(20),**
ersten und zweiten elektrischer Wechselstromleistungsleitungen **(21, 22)** und einer dritten elektrischen Leitung **(24)** jeweils entsprechend einer Vielzahl von Phasen der Wechselstromsystem-Leistungsversorgung **(20),**
einem Wechselrichter **(13),** der die durch die Leistungserzeugungsvorrichtung **(11)** erzeugte Gleichstromleistung in Wechselstromleistung umwandelt, wobei der Wechselrichter **(13)** die Wechselstromleistung von jedem von Ausgangsanschlüssen **(13c, 13d)** des Wechselrichters **(13)** zu jeweiligen ersten und zweiten elektrischen Wechselstromleistungsleitungen **(21, 22)** ausgibt, wobei die Ausgangsanschlüsse **(13c, 13d)** mit den ersten und zweiten elektrischen Leitungen **(21, 22)** verbunden sind,
einem Schalter der normalerweise geöffneten Bauart **(15, 15a, 15b),** der an jeder elektrischen Wechselstromleistungsleitung **(21, 22)** vorgesehen ist, wobei jeder Schalter der normalerweise geöffneten Bauart **(15, 15a, 15b)** zwischen der Systemleistungsversorgung **(20)** und dem Wechselrichter **(13)** vorgesehen ist,
einer Systemspannungserfassungsschaltung **(31),** die eine Spannung der Systemleistungsversorgung **(20)** von jeder der ersten und zweiten elektrischen Wechselstromleistungsleitungen **(21, 22)** erfasst, und
einer Steuerungseinheit **(16),** in die die von der Systemspannungserfassungsschaltung **(31)** erfasste Spannung der Systemleistungsversorgung **(20)** eingegeben wird,
wobei
die Steuerungseinheit **(16)** aufweist:
einen ersten Analog-Digital-Wandler **(16a),** in den eine erste Referenzspannung **(Vref1),** eine erste Erfassungsschaltungsausgabe und eine zweite Erfassungsschaltungsausgabe, die individuell von der Systemspannungserfassungsschaltung **(31)** ausgegeben werden, eingegeben werden,
einen zweiten Analog-Digital-Wandler **(16b),** in den eine zweite Referenzspannung **(Vref2),** die Summe der ersten Erfassungsschaltungsausgabe und der zweiten Erfassungsschaltungsausgabe, die aus der Systemspannungserfassungsschaltung **(31)** ausgegeben werden, eingegeben werden,
einen Vergleichsabschnitt **(16c),** in die ein von dem ersten Analog-Digital-Wandler **(16a)** ausgegebener erster Analog-Digital-Ausgangswert und ein von dem zweiten Analog-Digital-Wandler **(16a)** ausgegebener zweiter Analog-Digital-Ausgangswert eingegeben werden, wobei der Vergleichsabschnitt **(16c)** den von dem ersten Analog-Digital-Wandler **(16a)** ausgegebenen ersten Analog-Digital-Ausgangswert mit dem von dem zweiten Analog-Digital-Wandler **(16a)** ausgegebenen zweiten Analog-Digital-Ausgangswert vergleicht, und
einen Erfassungsgenauigkeitsbestimmungsabschnitt **(16d),** der eine Erfassungsgenauigkeit der Spannung der Systemleistungsversorgung **(20)** auf der Grundlage eines aus dem Vergleichsabschnitt **(16c)** eingegebenen Vergleichsergebnis bestimmt, wobei
die erste Erfassungsschaltungsausgabe und die zweite Erfassungsschaltungsausgabe individuell in den ersten Analog-Digital-Wandler **(16a)** eingegeben werden,
die erste Erfassungsschaltungsausgabe und die zweite Erfassungsschaltungsausgabe addiert werden und in den zweiten Analog-Digital-Wandler **(16b)** eingegeben werden,
wobei ein erster Erfassungsabschnitt **(31a)** der Systemspannungserfassungsschaltung **(31)** eine Spannung von jeder der ersten elektrischen Wechselstromleistungsleitung **(21)** und der dritten elektrischen Leitung **(24)** erfasst und die erste Erfassungsschaltungsausgabe ausgibt, und ein zweiter Erfassungsabschnitt **(31b)** der Systemspannungserfassungsschaltung **(31)** eine Spannung von jeder der zweiten elektrischen Wechselstromleistungsleitung **(22)** und der dritten elektrischen Leitung **(24)** erfasst und die zweite Erfassungsschaltungsausgabe ausgibt.

2. Dezentrales Leistungsversorgungssystem nach Anspruch 1, wobei:
die Systemspannungserfassungsschaltung **(31)** einen Addierabschnitt **(31c)** aufweist,
die ersten und zweiten Erfassungsabschnitte **(31a, 31b)** jeweilige Eingangsanschlüsse **(31a1, 31b1),** die mit den ersten und zweiten elektrischen Wechselstromleistungsleitungen **(21, 22)** verbunden sind, und jeweilige Eingangsanschlüsse **(31a2, 31b2)** aufweisen, die mit der dritten elektrischen Leitung **(24)** verbunden sind, wobei die ersten und zweiten Erfassungsabschnitte **(31a, 31b)** weiterhin jeweilige Ausgangsanschlüsse **(31a3, 31b3)** aufweisen, die individuell mit dem ersten Analog-Digital-Wandler **(16a)** verbunden sind, und
der Addierabschnitt **(31c)** einen Eingangsanschluss **(31c5, 31c6)** aufweist, der mit den Ausgangsanschlüssen **(31a3, 31b3)** der ersten und zweiten Erfassungsabschnitte **(31a, 31b)** verbunden ist, wobei der Addierabschnitt **(31c)** einen Ausgangsanschluss **(31c7)** aufweist, der mit dem zweiten Analog-Digital-Wandler **(16b)** verbunden ist.

3. Dezentrales Leistungsversorgungssystem nach Anspruch 2, weiterhin mit
einem Referenzspannungsversorgungsabschnitt **(41),** der eine erste Referenzspannung **(Vref1)** erzeugt und die erste Referenzspannung **(Vref1)** dem ersten Analog-Digital-Wandler **(16a)** zuführt, wobei der Referenzspannungsversorgungsabschnitt **(41)** eine zweite Referenzspannung **(Vref2)** erzeugt und die zweite Referenzspannung **(Vref2)** dem zweiten Analog-Digital-Wandler **(16b)** zuführt.

4. Dezentrales Leistungsversorgungssystem nach einem der Ansprüche 1 bis 3, wobei:
der Erfassungsgenauigkeitsbestimmungsabschnitt **(16d)** in einem Fall, in dem die erste Referenzspannung **(Vref1)** und die zweite Referenzspannung **(Vref2)** einer vorbestimmten Referenzspannung entsprechen, und in einem Fall, in dem der erste Analog-Digital-Wandler **(16a)** und der zweite Analog-Digital-Wandler **(16b)** den gleichen Ausgangswert ausgeben, bestimmt, dass die Erfassungsgenauigkeit der Spannung der Systemleistungsversorgung **(20)** hoch ist.

5. Dezentrales Leistungsversorgungssystem nach einem der Ansprüche 1 bis 3, wobei:
der Erfassungsgenauigkeitsbestimmungsabschnitt **(16d)** in einem Fall, in dem die erste Referenzspannung **(Vref1)** und/oder die zweite Referenzspannung **(Vref2)** außerhalb eines vorbestimmten Bereichs sind, und/oder in einem Fall, in dem Ausgangswerte des ersten Analog-Digital-Wandlers **(16a)** und des zweiten Analog-Digital-Wandlers **(16b)** variieren.

## Revendications

1. système d'alimentation électrique décentralisé comprenant :
un dispositif de production d'énergie (11) produisant une puissance en courant continu ;
une alimentation électrique de système à courant alternatif (20) ;
des premier et deuxième fils électriques d'alimentation en courant alternatif (21, 22) et un troisième fil électrique (24) correspondant à une pluralité de phases de l'alimentation électrique de système à courant alternatif (20), respectivement ;
un onduleur (13) convertissant la puissance en courant continu produite par le dispositif de production d'énergie (11) en puissance en courant alternatif, l'onduleur (13) délivrant en sortie la puissance en courant alternatif de chacune des bornes de sortie (13c, 13d) de l'onduleur (13) vers des premier et deuxième fils électriques d'alimentation en courant alternatif (21, 22) respectifs, les bornes de sortie (13c, 13d) étant connectées aux premier et deuxième fils électriques (21, 22) ;
un commutateur de type normalement ouvert (15, 15a, 15b) étant prévu à chaque fil électrique d'alimentation en courant alternatif (21, 22), chaque commutateur de type normalement ouvert (15, 15a, 15b) étant positionné entre l'alimentation électrique de système (20) et l'onduleur (13) ;
un circuit de détection de tension de système (31) détectant une tension de l'alimentation électrique de système (20) de chacun des premier et deuxième fils électriques d'alimentation en courant alternatif (21, 22) ; et
une unité de commande (16) à laquelle la tension de l'alimentation électrique de système (20) détectée par le circuit de détection de tension de système (31) est introduite ;
dans lequel
l'unité de commande (16) comporte :
un premier convertisseur analogique-numérique (16a) auquel une première tension de référence (Vref1), une première sortie de circuit de détection et une deuxième sortie de circuit de détection individuellement délivrées en sortie par le circuit de détection de tension de système (31), sont introduites ;
un deuxième convertisseur analogique-numérique (16b) auquel une deuxième tension de référence (Vref2), la somme de la première sortie de circuit de détection et de la deuxième sortie de circuit de détection délivrées en sortie par le circuit de détection de tension de système (31), sont introduites ;
une partie de comparaison (16c) à laquelle une première valeur de sortie analogique-numérique délivrée en sortie par le premier convertisseur analogique-numérique (16a) et une deuxième valeur de sortie analogique-numérique délivrée en sortie par le deuxième convertisseur analogique-numérique (16b) sont introduites, la partie de comparaison (16c) comparant la première valeur de sortie analogique-numérique délivrée en sortie par le premier convertisseur analogique-numérique (16a) avec la deuxième valeur de sortie analogique-numérique délivrée en sortie par le deuxième convertisseur analogique-numérique (16b) ; et
une partie de détermination de précision de détection (16d) déterminant une précision de détection de la tension de l'alimentation électrique de système (20) sur la base d'un résultat de comparaison introduit par la partie de comparaison (16c), où
la première sortie de circuit de détection et la deuxième sortie de circuit de détection sont individuellement introduites dans le premier convertisseur analogique-numérique (16a),
la première sortie de circuit de détection et la deuxième sortie de circuit de détection sont ajoutées et introduites dans le deuxième convertisseur analogique-numérique (16b),
où une première partie de détection (31a) du circuit de détection de tension de système (31) détecte une tension de chacun du premier fil électrique d'alimentation en courant alternatif (21) et du troisième fil électrique (24) et délivre en sortie la première sortie de circuit de détection, et une deuxième partie de détection (31b) du circuit de détection de système (31) détecte une tension de chacun du deuxième fil électrique d'alimentation en courant alternatif (22) et du troisième fil électrique (24) et délivre en sortie la deuxième sortie de circuit de détection .

2. Système d'alimentation électrique décentralisé selon la revendication 1, dans lequel :
le circuit de détection de tension de système (31) comporte une partie d'addition (31c) ;
les première et deuxième parties de détection (31a, 31b) comportent des bornes d'entrée respectives (31a1, 31b1) connectées aux premier et deuxième fils électriques d'alimentation en courant alternatif (21, 22) et des bornes d'entrée respectives (31a2, 31b2) connectées au troisième fil électrique (24), les première et deuxième parties de détection (31a, 31b) comportant en outre des bornes de sortie respectives (31a3, 31b3) connectées individuellement au premier convertisseur analogique-numérique (16a) ; et
la partie d'addition (31c) comporte une borne d'entrée (31c5, 31c6) connectée aux bornes de sortie (31a3, 31b3) des première et deuxième parties de détection (31a, 31b), la partie d'addition (31c) comportant une borne de sortie (31c7) connectée au deuxième convertisseur analogique-numérique (16b) .

3. Système d'alimentation électrique décentralisé selon la revendication 2, comprenant en outre :
une partie d'alimentation en tension de référence (41) produisant une première tension de référence (Vref1) et alimentant le premier convertisseur analogique-numérique (16a) en première tension de référence (Vref1), la partie d'alimentation en tension de référence (41) produisant une deuxième tension de référence (Vref2) et alimentant le deuxième convertisseur analogique-numérique (16b) en deuxième tension de référence (Vref2).

4. Système d'alimentation électrique décentralisé selon les revendications 1 à 3, dans lequel :
la partie de détermination de précision de détection (16d) détermine que la précision de détection de la tension de l'alimentation électrique de système (20) est élevée dans un cas où la première tension de référence (Vref1) et la deuxième tension de référence (Vref2) correspondent à une tension de référence prédéterminée et dans un cas où le premier convertisseur analogique-numérique (16a) et le deuxième convertisseur analogique-numérique (16b) délivrent en sortie la même valeur de sortie.

5. Système d'alimentation électrique décentralisé selon les revendications 1 à 3, dans lequel:
la partie de détermination de précision de détection (16d) détermine que la précision de détection de la tension de l'alimentation électrique de système (20) est faible dans un cas où au moins l'une de la première tension de référence (Vref1) et de la deuxième tension de référence (Vref2) est/sont en dehors d'une plage prédéterminée et/ou dans un cas où des valeurs de sortie du premier convertisseur analogique-numérique (16a) et du deuxième convertisseur analogique-numérique (16b) varient.
